# EUROPEAN PATENT APPLICATION

(11) **EP 2 874 348 A1**
(43) Date of publication of application: **20.05.2015**
(21) Application number: 13826530.1
(22) Date of filing: 04.03.2013
(51) Int. Cl.: H04L 12/18, H04L 29/06

(54) **CONFERENCE RESOURCE ALLOCATION METHOD AND DEVICE**

(30) Priority: 02.08.2012 CN 201210273334
(71) Applicant: Huawei Technologies Co., Ltd., Longgang District Shenzhen, Guangdong 518129 (CN)
(72) Inventor: MU, Zhengfeng, Shenzhen Guangdong 518129 (CN); ZHOU, Riming, Shenzhen Guangdong 518129 (CN)
(74) Representative: Thun, Clemens
(86) International application number: PCT/CN2013/072103
(87) International publication number: WO 2014/019361

(57) **Abstract**

Embodiments of the present invention disclose a method for allocating a conference resource, which is used to invoke a conference media resource in a unified manner according to a state of a current conference room, so as to improve resource utilization efficiency and reduce resource waste. The method in the embodiments of the present invention includes: receiving, by a conference server, information about a reserved conference media resource and information about a reserved conference room resource, and associating the information about the reserved conference media resource with the information about the reserved conference room resource; and if a conference state changes, instructing, by the conference server, a media resource management server to change the reserved conference media resource, and instructing a conference room management server to change a reserved conference room resource.

## Description

This application claims priority to Chinese Patent Application No. 201210273334.7, filed with the Chinese Patent Office on August 2, 2012 and entitled "METHOD AND APPARATUS FOR ALLOCATING CONFERENCE RESOURCE", which is hereby incorporated by reference in its entirety.

### TECHNICAL FIELD

The present invention relates to the field of communications technologies, and in particular, to a method and an apparatus for allocating a conference resource.

### BACKGROUND

Resources in a current conference system include: a conference room, a phone terminal, a Web Client (including a PC), and a server resource (including a voice server and a data conference server). When a user schedules and participates in a conference, the user performs a corresponding operation on these conference resources.

In the prior art, reserving a conference room resource and reserving a conference media resource are independent of each other, and the conference room resource and the conference media resource are respectively reserved by using two management systems. When a user intends to participate in a multimedia conference, the user needs to find, in the conference room, conference information about a previously scheduled conference, open a conference notification link in a mailbox, and manually join the multimedia conference by using a phone terminal in the conference room. When the conference needs to be prolonged, the user needs to first prolong use of the conference media resource by using a client, and then search for an idle conference room on the user's own, which is operationally complex and time-consuming.

However, in the prior art, the conference media resource and the conference room resource are independent, and the user needs to manually join a conference call and a data conference in a reserved conference room. When the conference needs to be prolonged, the user needs to manually prolong use of the both the two resources. However, generally, the conference room resource is reserved in advance; and therefore temporarily prolonging use of the both the two resources may complicate a prolonging operation and even the conference room resource cannot be found quickly. If a current conference ends ahead of schedule but a user who has reserved the conference room for a next conference cannot receive relevant notification information, the conference room resource becomes idle, which causes waste.

### SUMMARY

Embodiments of the present invention provide a method and an apparatus for allocating a conference resource, so as to allocate a conference media resource according to a state of a current conference room by associating information about the conference media resource with information about a conference room resource, and thereby improve conference resource allocation efficiency, and reduce conference resource waste.

In embodiments of the present invention, the method for allocating a conference resource includes: receiving, by a conference server, information about a reserved conference media resource and information about a reserved conference room resource, and associating the information about the reserved conference media resource with the information about the reserved conference room resource; and if a conference state changes, instructing, by the conference server, a media resource management server to change the reserved conference media resource, and instructing a conference room management server to change the reserved conference room resource.

In embodiments of the present invention, the apparatus for allocating a conference resource includes: a receiving unit, configured to receive information about a reserved conference media resource and information about a reserved conference room resource; an associating unit, configured to associate the information about the reserved conference media resource with the information about the reserved conference room resource that are received by the receiving unit; and a notifying unit, configured to: if a conference state changes, instruct a media resource management server to change the reserved conference media resource, and instruct a conference room management server to change a reserved conference room resource.

It can be seen from the foregoing technical solutions that, the embodiments of the present invention have the following advantages: A conference server receives information about a reserved conference media resource and information about a reserved conference room resource, and associates the information about the reserved conference media resource with the information about the reserved conference room resource; and if a conference state changes, the conference server instructs a media resource management server to change the reserved conference media resource, and instructs a conference room management server to change the reserved conference room resource. In this way, the conference server allocates the conference media resource and the conference room resource in a unified manner according to the information about the conference media resource and the information about the conference room resource that are currently associated, which thereby improves the conference resource allocation efficiency and reduces the conference resource waste.

### BRIEF DESCRIPTION OF DRAWINGS

To describe the technical solutions in embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other accompanying drawings from these accompanying drawings without creative efforts.
FIG. 1 is a schematic diagram of an embodiment of a method for allocating a conference resource according to an embodiment of the present invention;
FIG. 2 is a schematic diagram of another embodiment of the method for allocating a conference resource according to an embodiment of the present invention;
FIG. 3 is a flowchart of scheduling a conference according to an embodiment of the present invention;
FIG. 4 is a flowchart of joining a conference according to an embodiment of the present invention;
FIG. 5 is a flowchart of prolonging a conference according to an embodiment of the present invention;
FIG. 6 is a flowchart of ending a conference according to an embodiment of the present invention;
FIG. 7 is a schematic diagram of an embodiment of an apparatus for allocating a conference resource according to an embodiment of the present invention; and
FIG. 8 is a schematic diagram of another embodiment of the apparatus for allocating a conference resource according to an embodiment of the present invention.

### DESCRIPTION OF EMBODIMENTS

Embodiments of the present invention provide a method and an apparatus for allocating a conference resource, so as to invoke a conference media resource in a unified manner according to a state of a current conference room, thereby improving resource utilization efficiency and reducing resource waste. The following provides separate descriptions in detail. In the following embodiments, a conference server is configured to associate a conference room resource with a conference media resource and allocate a conference resource during a conference; a conference room management server is configured to allocate the conference room resource; and a media resource management server is configured to allocate the conference media resource.

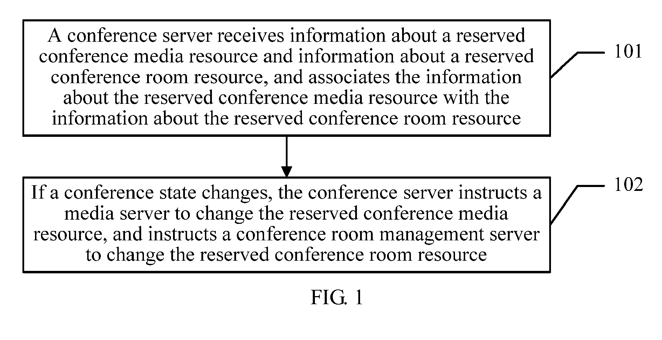

Referring to FIG. 1, an embodiment of the method for allocating a conference resource according to an embodiment of the present invention includes:
101: A conference server receives information about a reserved conference media resource and information about a reserved conference room resource, and associates the information about the reserved conference media resource with the information about the reserved conference room resource.

In this embodiment, a conference resource includes a conference media resource and a conference room resource, a media resource management server manages the conference media resource and a conference room management server manages the conference room resource, and the conference server is connected to both the media resource management server and the conference room management server.

The conference server receives the information about a reserved conference media resource that is sent by the media resource management server, receives the information about the reserved conference room resource that is sent by the conference room management server, and associates the information about the reserved conference media resource with the information about the reserved conference room resource; and the conference server learns use conditions of the conference media resource and the conference room resource according to the two associated pieces of information, so as to allocate the conference media resource and the conference room resource in a unified manner according to a user requirement.

102: If a conference state changes, the conference server instructs the media resource management server to change the reserved conference media resource, and instructs the conference room management server to change the reserved conference room resource.

If the conference state changes, the conference server allocates the conference resource in a unified manner according to the information about the reserved conference media resource and the information about the reserved conference room resource that are associated, and instructs the media resource management server to change the reserved conference media resource and instructs the conference room management server to change the reserved the conference room resource.

In the embodiment of the present invention, a conference server receives information about a reserved conference media resource and information about a reserved conference room resource, and associates the information about the reserved conference media resource with the information about the reserved conference room resource; and if a conference state changes, the conference server instructs a media resource management server to change the reserved conference media resource and instructs a conference room management server to change the reserved conference room resource. In this way, the conference server allocates the conference media resource and the conference room resource in a unified manner according to the information about the conference media resource and the information about the conference room resource that are currently associated, which thereby improves the conference resource allocation efficiency and reduces the conference resource waste.

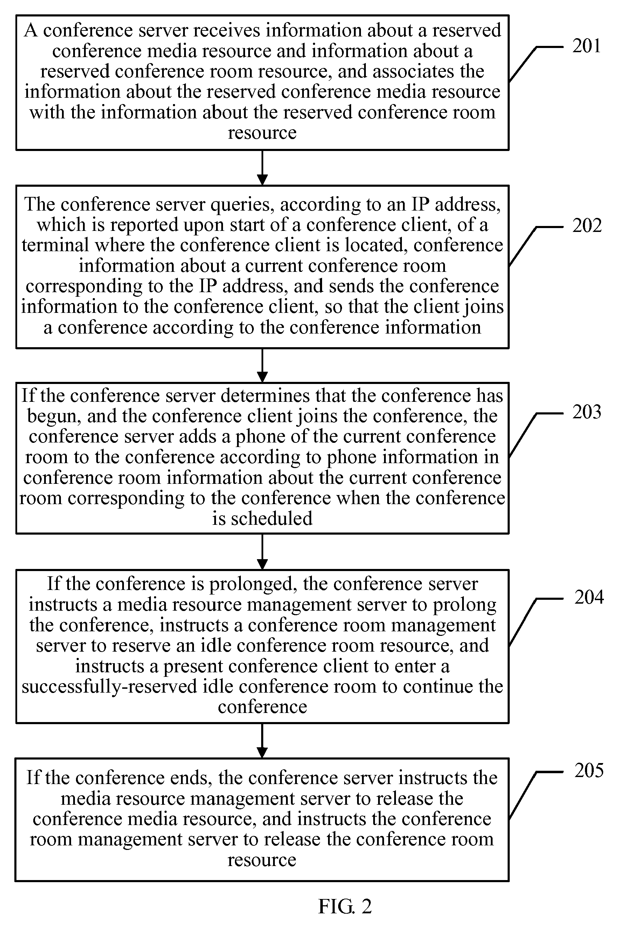

For ease of understanding, the following uses another embodiment to describe in detail the method for allocating a conference resource according to an embodiment of the present invention. Referring to FIG. 2, the another embodiment of the method for allocating a conference resource according to an embodiment of the present invention includes:
201: A conference server receives information about a reserved conference media resource and information about a reserved conference room resource, and associates the information about the reserved conference media resource with the information about the reserved conference room resource.

Specifically, a portal of the conference management page receives a request for scheduling a conference from a user that has logged in; conference information entered by the user when selecting a conference room includes: information such as the selected conference room, a topic of a multimedia conference, and a participant of the conference; and the Portal sends a request for reserving a conference room resource by calling an interface of the conference room management server.

Further, after the conference room resource is successfully reserved, the Portal queries, by using the conference room management server, detailed information about the successfully reserved conference room, including an Internet Protocol (IP, Internet Protocol) address of a personal computer (PC, Personal Computer) of the conference room, a phone number of the conference room, a specific location of the conference room, and so on; and then reserves a media resource of the conference server by calling an interface of the conference server, and at the same time sends conference room information corresponding to the conference to the conference server, so that the conference server associates a conference media resource and a conference room resource that are subsequently reserved successfully. The conference server reserves the conference media resource by calling an interface of a media resource server, and returns a conference reservation result to the Portal.

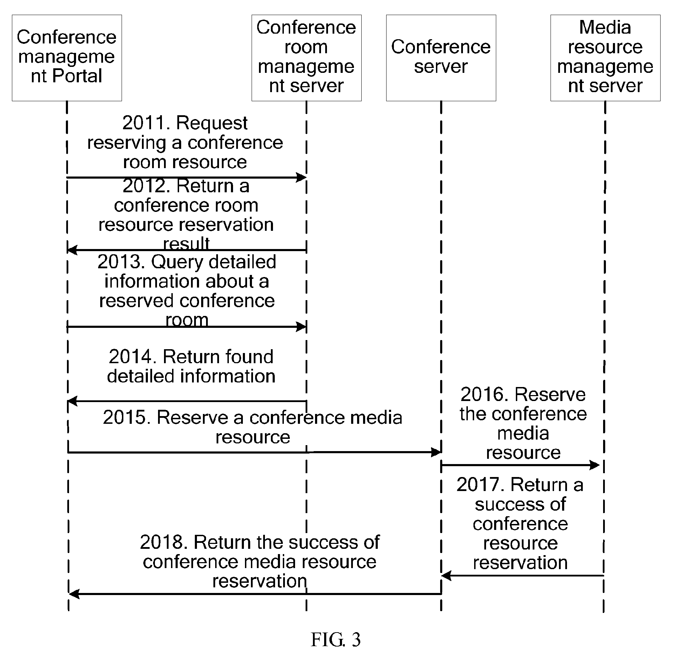

Referring to FIG. 3, FIG. 3 is a detailed flowchart of scheduling a conference according to this embodiment.

2011: A conference management Portal sends a request for reserving a conference room resource to a conference room management server.

A user schedules a conference by using the conference management Portal, and the conference management Portal calls the conference room management server to reserve the conference room resource, and sends the request for reserving the conference room resource.

2012: The conference room management server returns a conference room resource reservation result.

2013: The conference management Portal sends a request for querying information about the reserved conference room to the conference room management server.

2014: The conference room management server returns found detailed conference room information to the conference management Portal.

The detailed conference room information that is found in this step may also be returned by the conference room management server in step 2012, without a need for step 2013, in which the conference management Portal sends a query request.

2015: The conference management Portal sends a request for reserving a conference media resource to a conference room server.

The information about the reserved conference room is also sent to the conference server.

2016: The conference server sends a request for reserving the conference media resource to the media resource management server.

2017: The media resource management server returns to the conference server a message indicating that the conference media resource is reserved successfully.

2018: The conference server returns to the conference management Portal a message indicating that the conference media resource is reserved successfully.

The foregoing is a detailed process of scheduling a conference.

202: The conference server queries, according to an IP address of a terminal where a conference client runs, which is reported upon start of the conference client, conference information about a current conference room corresponding to the IP address, and sends the conference information to the conference client, so that the client joins the conference according to the conference information.

Specifically, after the conference begins, the user joins the conference by starting the conference client on the PC of the conference room. The conference client may be started along with a system. In this embodiment, a multimedia conference client is used as an example of the conference client. When the multimedia conference client is started, the conference client actively connects to the conference server and reports the IP address of the PC where the conference client is located to the conference server, and the conference server obtains, according to the IP address, conference information about a current conference room corresponding to the IP address, and returns the conference information to the conference client.

Further, the conference client joins the conference according to an identifier of the conference or a link for joining the conference in the conference information sent by the conference server, where the identifier of the conference may be a name of the conference, an ID of the conference, or another parameter that identifies the conference, and the link for joining the conference may be a Uniform/Universal Resource Locator, URL.

Still further, the conference client determines, according to a participant list in the conference information sent by the conference server and an account number of a user that currently logs in to the conference client, that the user is an authorized user, and then joins the conference, which may specifically be that, if the user that currently logs in is in the participant list of the conference, it is determined that the user is authorized, and the conference client automatically joins the conference by using the conference information; otherwise, it is determined that the user is unauthorized, and the conference client prompts that the user does not have a right to join the conference, and rejects adding the user to the conference.

203: If the conference server determines that the conference has been started and the conference client joins the conference, the conference server adds a phone of the current conference room to the conference according to phone information in conference room information about the current conference room corresponding to the conference when the conference is scheduled.

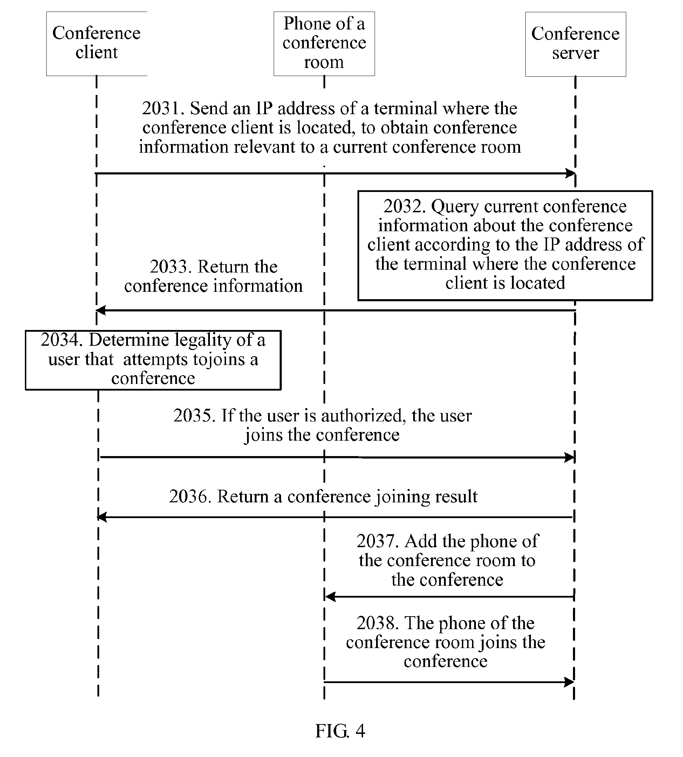

Referring to FIG. 4, FIG. 4 is a detailed flowchart of joining a conference according to this embodiment.

2031: A conference client sends an IP address of a terminal where the client is located to a conference server, to obtain conference information relevant to a current conference room.

2032: The conference server obtains the current conference information about the conference client according to the IP address of the terminal where the conference client is located.

2033: The conference server returns found conference information to the conference client.

2034: The conference client determines legality of a user that attempts to joins the conference.

The conference client determines, according to a participant list in the current conference information returned by the conference server and information about the user that currently logs in to a PC system of the conference room, the legality of the user that currently logs in to join the conference. If the user that currently logs in is not in the participant list of the conference, the user is determined as an unauthorized user, and the conference client prompts that the user does not have the right to join the conference and rejects adding the user to the conference.

2035: If the user is authorized, the user directly joins the conference.

If the user that currently logs in is in the participant list of the conference, the user is determined as an authorized user and directly joins the conference.

2036: The conference server returns a conference joining result.

The conference server returns the conference joining result to the conference client.

2037: The conference server adds the phone of the conference room to the conference.

2038: The phone of the conference room joins the conference.

The foregoing is a detailed process of joining a conference.

204: If the conference needs to be prolonged, the conference server instructs the media resource management server to prolong the conference, instructs the conference room management server to reserve an idle conference room resource, and instructs a present conference client to enter a successfully-reserved idle conference room to continue the conference.

If conference duration has elapsed but the conference needs to be prolonged because the topic of the conference is not finished, the conference server instructs the media resource management server to prolong the conference and instructs the conference room management server to reserve the idle conference room resource, and after the reservation succeeds, instructs the present conference client to enter the successfully-reserved idle conference room to continue the conference. The prolonging the conference specifically includes prolonging an occupation duration of the conference media resource.

Specifically, if a user does not exit the conference after the conference server detects that the conference duration has elapsed, the conference server calls the interface of the media resource management server to prolong the conference to sends a conference prolonging request to the media resource management server, so as to request use prolonging of the conference media resource. Further, after the conference is prolonged, the conference server sends information about the current conference room to the conference room management server, the conference room management server queries information about a conference room closest to the current conference room, the conference room management server returns the found conference room information, and the conference server reserves the conference room by using the conference room management server. If there are multiple conference rooms closest to the current conference room, the user determines a specific conference room to reserve.

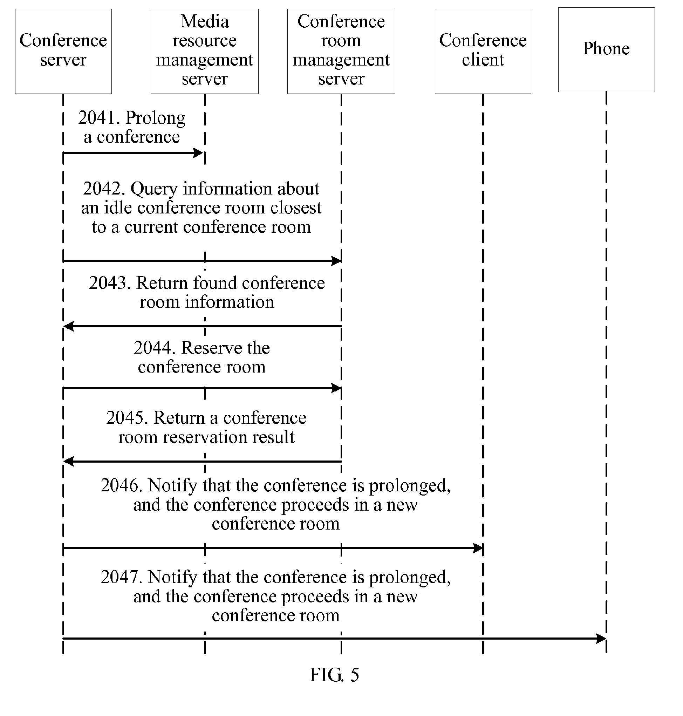

After a conference room is reserved successfully, the conference server sends notification information to the conference client to notify the user that the conference is prolonged and instruct the user to enter the new conference room to continue the conference, and plays prompt information by using the phone that joins the current conference room for the conference to prompt a participant that the conference is prolonged and prompt the participant to enter the successfully-reserved idle conference room to continue the conference. If the current conference room is not reserved for a next conference, the current conference room is first used as a place for the prolonged conference. Referring to FIG. 5, FIG. 5 is a detailed flowchart of prolonging a conference according to an embodiment of the present invention.

2041: A conference server instructs a media resource management server to prolong a conference. 2042: The conference server instructs a conference room management server to query information about an idle conference room closest to a current conference room.

2043: The conference room management server returns found conference room information.

2044: The conference server instructs the conference room management server to reserve the conference room.

The conference server selects, according to the found information about the idle conference room, a conference room to be reserved, and instructs the conference room management server to reserve the conference room.

2045: The conference room management server returns a conference room reservation result to the conference server.

2046: The conference server notifies the conference client that the conference is prolonged, and instructs the conference client to enter a new conference room to continue the conference.

2047: The conference server notifies a participant that the conference is prolonged, and instructs the participant to enter the new conference room to continue the conference.

The foregoing is a detailed process of prolonging a conference.

205: If the conference ends, the conference server instructs the media resource management server to release the conference media resource, and instructs the conference room management server to release the conference room resource.

If the conference ends normally or ends ahead of schedule, the conference server notifies the media resource management server that the conference ends, and the media resource management server releases the conference media resource; and the conference server notifies the conference room management server that the conference ends, and the conference room management server releases the conference room resource.

Specifically, the user ends the conference by using the multimedia conference client; the multimedia conference client ends the conference by calling an interface of the conference server; and the conference server first calls an interface of the media resource management server to instruct the media resource management server to release the conference media resource, and then calls an interface of the conference room management server to instruct the conference room management server to release the conference room resource.

Further, after the media resource and the conference room resource are released, the conference server cuts off the phone in the current conference, and sends a conference end message to another conference client in the conference except the conference client that proposes to end the conference, so as to instruct each conference client to release the occupied conference resource thereof.

When the conference room management server detects that the conference room resource is released ahead of schedule, it indicates that the conference ends ahead of schedule; and the conference room management server sends a notification to a next user that reserves the conference room to notify the user that the current conference room is idle, and the user determines whether to start the conference ahead of schedule.

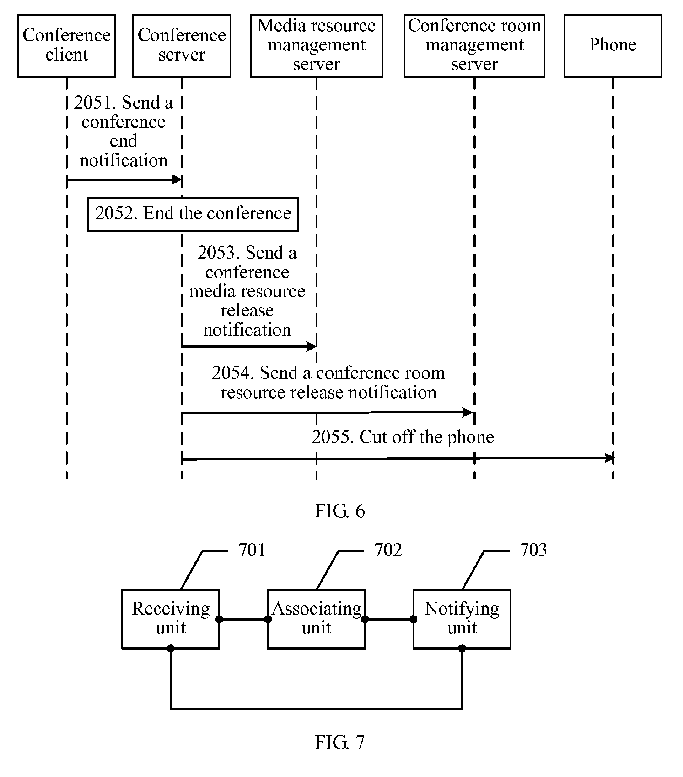

Referring to FIG. 6, FIG. 6 is a detailed flowchart of ending a conference according to an embodiment of the present invention.

2051: A conference client sends a conference end notification to a conference server.

A conference client that proposes to end a conference sends a conference end notification to the conference server.

2052: The conference server determines an end of the conference.

2053: The conference server sends a conference media resource release notification to a media resource management server.

2054: The conference server sends a conference room resource release notification to a conference room management server.

2055: The conference server cuts off the phone.

The foregoing is a detailed process of ending a conference.

In this embodiment, the conference server sends a presence state and conference room information of a current user to another conference client, and sends the presence state and conference room information of the current user to a third-party server, where the third-party server has subscribed to conference change information and can obtain real-time change information about the conference resource of the current user.

It should be noted that: the third-party server may be a server in an original conference system, and a conference resource allocation system in this embodiment can provide a corresponding interface for connecting to the server in the original conference system.

Specifically, when the conference is ongoing, the conference server synchronizes a presence state, including the specific conference room information, of the current user, to another conference client, and the client displays that a state of the user is in conference, and can further display detailed information about a conference room where the user is located. In addition, the conference server can provide an interface for subscribing to and notifying the state of the user, so that a third-party application service subscribes to the state of the user, and the third-party application service is notified of the state of the current user through the interface, which makes it convenient to display the user state of the current conference in a correct and real-time manner. When the conference is prolonged, after prolonging use of the conference room resource, the conference server notifies another conference client of updated information about the conference room where the user is located, and the client can update the conference room information of the user in real time; and in addition, the conference server also notifies, through a user state notification interface, the third-party application service of information about a change of the conference room information of the user. When the conference ends, the conference server sets the state of the user to idle, and notifies, through the user state notification interface, the third-party application service of information about a change of the state of the user.

In the embodiment of the present invention, a conference server associates information about a reserved conference media resource with information about a reserved conference room resource, and the conference server queries conference information about a conference client, and sends the conference information to the conference client, so that the client joins a conference according to the conference information. If the conference server determines that the conference has begun, and a conference client has joined the conference, the conference server adds a phone of a conference room to the conference according to phone information about the conference room corresponding to the conference when the conference is scheduled. If the conference is prolonged, the conference server instructs a media resource management server or a conference room management server to reserve a next conference room, and instructs a present participant to enter a successfully reserved conference room to continue the conference. If the conference ends, the conference server instructs the media resource management server and the conference room management server to release the conference media resource and the conference room resource respectively. The conference server allocates and releases the conference media resource in a unified manner according to the currently associated conference room, which thereby improves resource allocation efficiency and reduces conference resource waste. At the same time, a presence state of a current user is synchronized to another conference client or a third-party server, so that a state of a user is updated in real time.

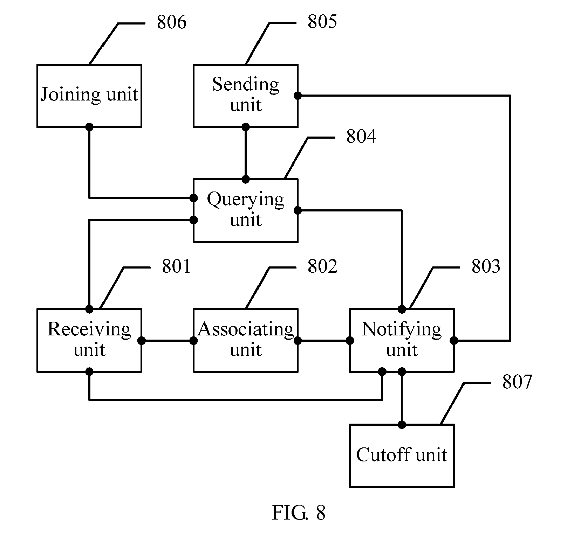

The following introduces the apparatus for allocating a conference resource according to an embodiment of the present invention. Referring to FIG. 7, an embodiment of the apparatus for allocating a conference resource according to an embodiment of the present invention includes:
a receiving unit 701, configured to receive information about a reserved conference media resource and information about a reserved conference room resource;
an associating unit 702, configured to associate the information about the reserved conference media resource with the information about the reserved conference room resource that are received by the receiving unit; and
a notifying unit 703, configured to: if a conference state changes, instruct, by the conference server, a media resource management server to change the reserved conference media resource, and instruct a conference room management server to change the reserved conference room resource.

For specific processes in which the units in the apparatus according to the embodiment of the present invention implement their respective functions, refer to relevant description in the embodiment shown in FIG. 1. These specific processes are not repeated herein.

In the embodiment of the present invention, the receiving unit 701 receives information about a reserved conference media resource and information about a reserved conference room resource; the associating unit 702 associates the information about the reserved conference media resource with the information about the reserved conference room resource that are received by the receiving unit 701; and if the conference state changes, the notifying unit 704 instructs a media resource management server to change the reserved conference media resource, and instructs a conference room management server to change the reserved conference room resource. In this way, a conference server allocates the conference media resource in a unified manner according to the information about the conference media resource and the information about the conference room resource that are currently associated, which thereby improves conference resource allocation efficiency, and reduces conference resource waste.

For ease of understanding, the following uses another embodiment to introduce in detail the apparatus for allocating a conference resource according to the embodiments of the present invention. Referring to FIG. 8, the another embodiment of the apparatus for allocating a conference resource according to the embodiments of the present invention includes:
a receiving unit 801, configured to receive information about a reserved conference media resource and information about a reserved conference room resource;
an associating unit 802, configured to associate the information about the reserved conference media resource with the information about the reserved conference room resource that are received by the receiving unit 801; and
a notifying unit 803, specifically configured to: if a conference is prolonged, instruct a media resource management server to prolong the conference, instruct a conference room management server to reserve an idle conference room resource, and instruct a present conference client to enter a successfully-reserved idle conference room to continue the conference, where the prolonging the conference specifically includes prolonging an occupation duration of the conference media resource; where
the notifying unit 803 is further specifically configured to: if the conference ends, instruct the media resource management server to release the conference media resource, and instruct the conference room management server to release the conference room resource.

It should be noted that the apparatus for allocating a conference resource according to the embodiment of the present invention may further include:
a querying unit 804, configured to query, according to an IP address, which is reported upon start of a conference client, of a terminal where the conference client is located, conference information about a current conference room corresponding to the IP address of the terminal where the conference client is located, where the conference information includes an identifier of the conference or a link for joining the conference;
a sending unit 805, configured to send the conference information to the conference client, so that the client joins a conference according to the conference information, where
further, the sending unit 805 is specifically configured to send the conference information to the conference client, where the conference information includes the identifier of the conference or the link for joining the conference, and a participant list, so that the client determines, according to the participant list in the conference information and an account number of a user that currently logs in to the conference client, that the user is an authorized user, and then joins the conference; and
a joining unit 806, configured to: if it is determined that the conference client joins the conference, add a phone of the current conference room to the conference according to phone information in conference room information about the reserved current conference room, where
the notifying unit 803 is further configured to: send information about the current conference room to the conference room management server, instruct the conference room management server to reserve an idle conference room resource closest to the current conference room, and instruct the present conference client to enter the successfully-reserved idle conference room to continue the conference.

Still further, the apparatus for allocating a conference resource according to the embodiment of the present invention may further include:
a cutoff unit 807, configured to cut off the phone in the conference, where
the notifying unit 803 is further configured to notify another conference client in the conference that the conference ends, so that a conference room client releases the conference resource;
the sending unit 805 is further configured to play prompt information by using the phone of the current conference room that has joined the conference, where the prompt information is used to prompt a participant that the conference is prolonged and prompt the participant to enter the successfully-reserved idle conference room to continue the conference; and
the sending unit 805 is further configured to send a presence state and conference room information of a current user to a conference client except a conference client of the current user; or send a presence state and conference room information of a current user to a third-party server that has subscribed to conference change information.

In the embodiment of the present invention, the receiving unit 801 receives information about a reserved conference media resource and information about a reserved conference room resource; the associating unit 802 associates the information about the reserved conference media resource with the information about the reserved conference room resource; the querying unit 804 queries, according to an IP address, which is reported upon start of a conference client, of a terminal where the conference client is located, conference information about a current conference room corresponding to the IP address of the terminal where the conference client is located, where the conference information includes an identifier of a conference or a link for joining a conference; and the sending unit 805 sends the conference information to the conference client, so that the client joins the conference according to the conference information, which may specifically be that: the sending unit 805 sends the conference information to the conference client, so that the client determines, according to a participant list in the conference information and an account number of a user that currently logs in to the conference client, that the user is an authorized user, and then joins the conference, where the conference information includes the identifier of the conference or the link for joining the conference, and the participant list. If a conference client joins the conference, the joining unit 806 adds a phone of the current conference room to the conference according to phone information in information about the reserved conference room. If the conference is prolonged, the notifying unit 803 instructs a media resource management server to prolong the conference, instructs a conference room management server to reserve an idle conference room resource, and instruct a present conference client to enter a successfully-reserved idle conference room to continue the conference, where specifically, if the conference is prolonged, the notifying unit 803 instructs the media resource management server to prolong the conference, the sending unit 805 sends the information about the current conference room to the conference room management server, and the notifying unit 803 instructs the conference room management server to reserve an idle conference room resource closest to the current conference room, and instructs the present conference client to enter the successfully-reserved idle conference room to continue the conference. If the conference ends, the notifying unit 803 instructs the media resource management server to release the conference media resource, instructs the conference room management server to release the conference room resource, and cuts off the phone in the conference; and the notifying unit 803 notifies another conference client in the conference that the conference ends, so that the conference client releases the conference resource. The sending unit 805 plays prompt information by using the phone of the current conference room that has joined the conference, where the prompt information is used to prompt a participant that the conference is prolonged and prompt the participant to enter the successfully-reserved idle conference room to continue the conference; and the sending unit 805 further sends a presence state and conference room information of a current user to a conference client except a conference client of the current user, and sends the presence state and conference room information of the current user to a third-party server that has subscribed to conference change information, to change the conference room information of the current user. A conference server allocates and releases the conference media resource in a unified manner according to the information about the conference media resource and the information about the conference room resource that are currently associated, which thereby improves conference resource allocation efficiency and reduces conference resource waste.

A person skilled in the art may understand that all or a part of the steps of the methods in the embodiments may be implemented by a program instructing relevant hardware. The program may be stored in a computer readable storage medium. The storage medium may be a read-only memory, a magnetic disk, an optical disc, or the like.

The foregoing describes in detail a method and an apparatus for allocating a conference resource according to the present invention. A person skilled in the art may make variations to the specific implementation manners and application scope according to the ideas of the present invention. To conclude, the content of the specification shall not be construed as a limitation to the present invention.

## Claims

1. A method for allocating a conference resource, comprising:
receiving, by a conference server, information about a reserved conference media resource and information about a reserved conference room resource, and associating the information about the reserved conference media resource with the information about the reserved conference room resource; and
instructing, by the conference server if a conference state changes, a media resource management server to change the reserved conference media resource, and instructing a conference room management server to change the reserved conference room resource.

2. The method according to claim 1, wherein the instructing, by the conference server if a conference state changes, a media resource management server to change the reserved conference media resource, and instructing a conference room management server to change the reserved conference room resource comprises:
if a conference is prolonged, instructing, by the conference server, the media resource management server to prolong the conference, instructing the conference room management server to reserve an idle conference room resource, and instructing a present conference client to enter a successfully-reserved idle conference room to continue the conference; or
if a conference ends, instructing, by the conference server, the media resource management server to release the conference media resource, and instructing the conference room management server to release the conference room resource.

3. The method according to claim 1, wherein before the instructing, by the conference server if a conference state changes, a media resource management server to change the reserved conference media resource, and instructing a conference room management server to change the reserved conference room resource, the method further comprises:
querying, by the conference server according to an IP address, which is reported upon start of a conference client, of a terminal where the conference client is located, conference information about a current conference room corresponding to the IP address; and
sending the conference information to the conference client, so that the client joins a conference according to the conference information, wherein the conference information comprises an identifier of the conference or a link for joining the conference.

4. The method according to claim 3, wherein the sending the conference information to the conference client, so that the client joins a conference according to the conference information comprises:
sending the conference information to the conference client, wherein the conference information comprises the identifier of the conference or the link for joining the conference, and a participant list, so that the client determines, according to the participant list in the conference information and an account number of a user that currently logs in to the conference client, that the user is an authorized user, and then joins the conference.

5. The method according to claim 3 or 4, wherein the method further comprises:
if the conference server determines that the conference client joins the conference, adding a phone of the current conference room to the conference according to phone information in conference room information about the current conference room.

6. The method according to claim 2, wherein the instructing the conference room management server to reserve an idle conference room resource comprises:
sending, information about a current conference room to the conference room management server, and instructing the conference room management server to reserve an idle conference room resource closest to the current conference room.

7. The method according to claim 5 or 6, wherein after the instructing a present conference client to enter a successfully-reserved idle conference room to continue the conference, the method comprises:
playing, by the conference server, prompt information by using the phone of the current conference room that has joined the conference, wherein the prompt information is used to prompt a participant that the conference is prolonged and prompt the participant to enter the successfully-reserved idle conference room to continue the conference.

8. The method according to claim 2, wherein after the instructing, by the conference server if the conference ends, the media resource management server to release the conference media resource, and instructing the conference room management server to release the conference room resource, the method comprises:
cutting off, by the conference server, a phone in the conference, and notifying the conference client in the conference that the conference ends, so that the conference client releases a current conference resource.

9. The method according to any one of claims 1 to 8, further comprising:
sending, by the conference server, a presence state and conference room information of a current user to a conference client except a conference client of the current user; or
sending a presence state and conference room information of a current user to a third-party server that has subscribed to conference change information.

10. An apparatus for allocating a conference resource, comprising:
a receiving unit, configured to receive information about a reserved conference media resource and information about a reserved conference room resource;
an associating unit, configured to associate the information about the reserved conference media resource with the information about the reserved conference room resource that are received by the receiving unit; and
a notifying unit, configured to: if a conference state changes, instruct a media resource management server to change the reserved conference media resource, and instruct a conference room management server to change the reserved conference room resource.

11. The apparatus according to claim 10, wherein,
the notifying unit is further specifically configured to: if a conference is prolonged, instruct the media resource management server to prolong the conference, instruct the conference room management server to reserve an idle conference room resource, and instruct a present conference client to enter a successfully-reserved idle conference room to continue the conference; or
the notifying unit is further specifically configured to: if a conference ends, instruct the media resource management server to release the conference media resource, and instruct the conference room management server to release the conference room resource.

12. The apparatus according to claim 10 or 11, further comprising:
a querying unit, configured to query, according to an IP address, which is reported upon start of a conference client, of a terminal where the conference client is located, conference information about a current conference room corresponding to the IP address of the terminal where the conference client is located, wherein the conference information comprises an identifier of the conference or a link for joining the conference; and
a sending unit, configured to send the conference information to the conference client, so that the client joins a conference according to the conference information.

13. The apparatus according to claim 12, wherein,
the sending unit is specifically configured to send the conference information to the conference client, wherein the conference information comprises the identifier of the conference or the link for joining the conference, and a participant list, so that the client determines, according to the participant list in the conference information and an account number of a user that currently logs in to the conference client, that the user is an authorized user, and then joins the conference.

14. The apparatus according to claim 13, further comprising:
a joining unit, configured to: if it is determined that the conference client joins the conference, add a phone of the current conference room to the conference according to phone information in conference room information about the current conference room.

15. The apparatus according to claim 14, wherein,
the notifying unit is further configured to: if the conference is prolonged, instruct the media resource management server to prolong the conference; or
the notifying unit is further configured to instruct the conference room management server to reserve an idle conference room resource closest to the current conference room, and instruct the present conference client to enter the successfully-reserved idle conference room to continue the conference.
